# EUROPEAN PATENT SPECIFICATION

(11) **EP 1 864 850 B1**
(45) Date of publication and mention of the grant of the patent: **30.03.2011**
(21) Application number: 07109929.5
(22) Date of filing: 08.06.2007
(51) Int. Cl.: B60N 2/06, B60N 2/30

(54) **Extendable seat unit for transport vehicle, and corresponding transport vehicle**
Ausziehbare Sitzeinheit für Transportfahrzeug, und entsprechendes Transportfahrzeug
Unité de siège extensible pour véhicule de transport, et véhicule de transport correspondant

(30) Priority: 09.06.2006 FR 0605136
(43) Date of publication of application: 12.12.2007
(73) Proprietor: Iveco France S.A., 69200 Vénissieux (FR)
(72) Inventor: Desneux, Alexandre, 38460 Chamagnieu (FR)
(74) Representative: Borsano, Corrado

(56) References cited:
- EP-A1- 1 342 612
- FR-A1- 2 587 946
- FR-A1- 2 811 620
- GB-A- 307 372
- US-A- 1 643 236

## Description

The present invention concerns an extendable seat unit for a transport vehicle, as well as a transport vehicle equipped with at least one such seat.

The invention is aimed at all types of transport vehicle whose route involves at least one station stop, during which people are likely to board the vehicle, and also to alight from it. It is aimed at such a vehicle, which may or may not be driven in a dedicated lane, in particular by means of electric wires, of rails or even by optical means.

This type of transport vehicle typically includes a chassis mounted on at least one axle having rolling devices, which are usually wheels which may have tyres. In these conditions, transport vehicles in the sense of the invention include in particular, but not exclusively, buses and also trolleybuses or tramways.

Typically, this body is equipped, along its lateral edges, by various seats intended for passengers. These seats may be single, in other words allowing one sole passenger to use them, or multiple, in that they allow several passengers to sit down next to each other.
From french patent document FR 2811620 A1, which is regarded as the closest prior art, is known an extendable seat unit for transport vehicle, comprising a pedestal intended to rest on the floor of a body of the vehicle, as well as a main seat bottom and a main seatback which are suitable to hold a first passenger The seat unit also comprises a secondary seat bottom and a secondary seatback which are movable between a retracted position, in which they are stowed in relation to the main seat bottom and the main seatback, and an extended position, in which they are arranged alongside the main seat bottom and the main seatback so as to hold a second passenger. The secondary seat bottom and the secondary seatback are mobile in relation to the main seat bottom and the main seatback by means of a lateral movement, in relation to a main longitudinal axis of the vehicle, while the pedestal of the seat unit does not protrude laterally beyond the main seat bottom. The unit according to the abovecited seat unit is provided with a housing within which the secondary seat bottom is stowed in the seat's retracted position, with secondary seatback folded over said secondary seat bottom.

This having been specified, the invention aims to propose an extendable seat unit which is able to simply and quickly take on different configurations, so as to respond to different numbers of passengers.

The invention also aims to propose a said extendable seat unit, which allows easy maintenance of the transport vehicle which it equips, in particular in terms of cleaning.

The invention also aims to propose a transport vehicle, equipped with said extendable seat units, for which the layout of said seat units is able to adapt optimally to different amounts of passengers.

To this end, it has as its object an extendable seat unit for a transport vehicle, comprising a pedestal intended to rest on a floor of a body of said vehicle, as well as a main seat bottom and a main seatback which are suitable to receive a first passenger, wherein that said seat unit also comprises a secondary seat bottom and a secondary seatback which can be moved between a retracted position, in which they are stowed away in relation to the main seat bottom and the main seatback, and an extended position, in which they are arranged next to the main seat bottom and the main seatback so as to receive a second passenger, said secondary seat bottom and secondary seatback being mobile in relation to said main seat bottom and main seatback, according to a sideways movement, in reference to a main longitudinal axis of the vehicle, while the pedestal of the seat unit does not protrude laterally beyond the main seat bottom; and housing means within which at least said secondary seat bottom is stowed in the seat's retracted position; the seat unit being characterized in that, in its retracted position, said secondary seat bottom and said secondary seatback are stored respectively, behind said main seat bottom and said main seatback*.*

According to other characteristics of the invention:
- said housing means comprise a U-shaped support element, the lower wing of which is mounted on the pedestal, and the upper wing of which supports the main seat bottom, these two wings defining an intermediate space in which said secondary seat bottom is stowed in the seat's retracted position;
- the main seat bottom and the main seatback have an opening hollowed out in them, *forming said housing means within* which the secondary seat bottom and secondary seatback are stowed, in the seat's retracted position;
- the seat unit is equipped with a means for moving the secondary seat bottom and the secondary seatback in relation to the main seat bottom and the main seatback, said means of movement comprising a slide guide fixed to the pedestal, as well as a slide guide that is mobile in relation to the fixed slide guide, said mobile slide guide being joined to the secondary seat bottom at least;
- the fixed slide guide is mounted on the lower wing of the support element, while the mobile slide guide is mounted beneath the secondary seat bottom;
- the fixed slide guide is mounted on the lower wall of the opening, while the mobile slide guided is mounted beneath the secondary seat bottom;
- the pedestal takes the form of a shell, specifically in composite material, having an overall triangular shape, one vertical side of said triangle being able to be placed against a lateral edge of the vehicle's body, one horizontal side of said triangle being placed alongside the main seat bottom, and one oblique side of said pedestal extending above the floor of the vehicle, once the seat unit has been assembled.

The invention also has as its object a transport vehicle, in particular a bus, a trolleybus or a tram, comprising a body, at least one front axle and at least one back axle, as well as at least one line of extendable seat units such as those described above and/or at least one row of extendable seat units such as those described above.

According to other characteristics of the invention:
- a line of extendable seat units is provided along one side of the vehicle's body, which is opposite the access doors to said vehicle ;
- a line of extendable seat units is provided on at least one of the two front wheel arches.

The invention will be better understood and other advantages of said invention will become clearer in the light of the following description of two embodiments of an extendable seat unit according to its principle, as well as an embodiment of a transport vehicle according to its principle, given purely by way of example and with reference to the annexed drawings, in which:
- figure 1A is a view from above, illustrating a transport vehicle according to this invention, equipped with extendable seat units in their retracted position ;
- figure 1B is a view from above, similar to figure 1A, illustrating the same vehicle in which the seat units are now in their extended position;
- figure 2 is a perspective view, illustrating two seat units belonging to the vehicles in figures 1A and 1B, in their respective retracted and extended positions;
- figure 3 is a perspective view illustrating an extendable seat unit according to one embodiment of this invention, in its extended position.

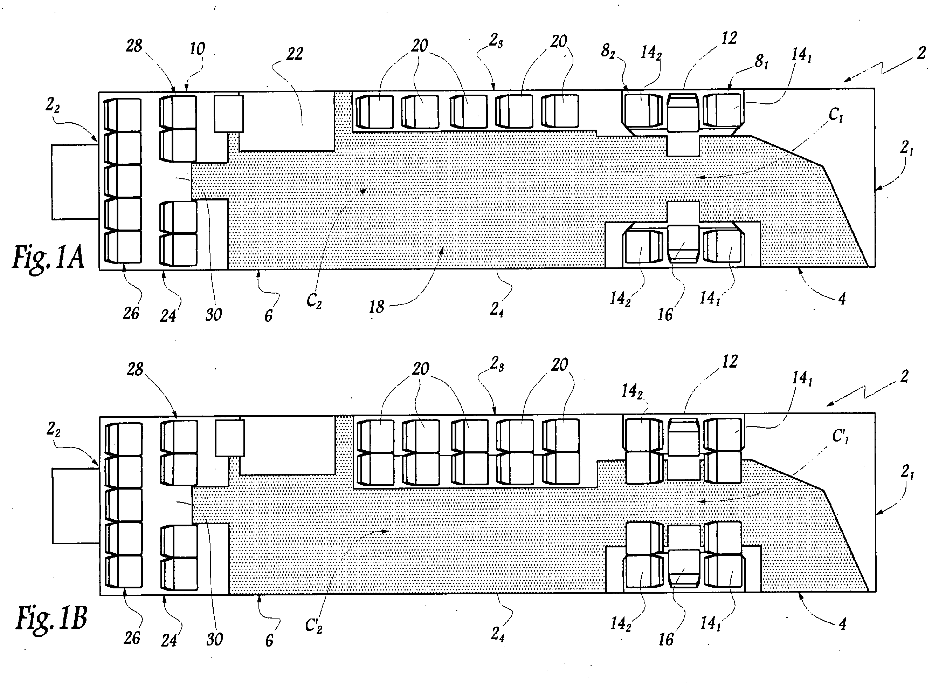

Figures 1A and 1B illustrate a transport vehicle according to this invention, which comprises a body 2 the front end of which has the reference number 2₁, and is situated to the right of these drawings, while its back end has the reference number 2₂. The body 2 is equipped with a front door 4, as well as a back door 6.

The body 2 is supported by wheels, which may have tyres. At the front, there are two axles 8₁ and 8₂ fitted with said wheels, which are placed one behind the other immediately behind the front door 4. There is also a single rear axle 10, the wheels of which are however larger than those on the front axles 8₁ and 8₂.

Four extendable seat units according to this invention are mounted on the arches 12 of the front wheels. There are thus two front seat units 14₁ placed in the opposite direction of travel, as well as two back seat units 14₂, placed in the direction of travel. These different seat units define two separating recesses 16, allowing baggage to be stored or a flip-up seat to be installed, allowing a passenger to be seated perpendicularly to the direction of travel.

Immediately behind the front wheel arches 12, the body 2 has a middle area 18, equipped with a line of extendable seat units 20 according to the invention. Said extendable seat units, of which in this instance there are five, are placed one behind the other. The seat units are placed along the side edge 2₃ of the body 2, opposite the doors 4 and 6, while 2₄ denotes the side edge of the body which is equipped with said doors.

Opposite the back door 6, there is a platform 22, which may be accessed by persons with reduced mobility, particularly those travelling in a wheelchair. Lastly, above the back wheel arch 24, there is firstly a row 26 of fixed seats, of a known variety, placed against the back end 2₂ of the vehicle body 2. This row 26 is preceded by a row 28 of seats that are also fixed and are arranged in two groups of two, in the centre of which an opening 30 is defined, allowing access to the back row 26.

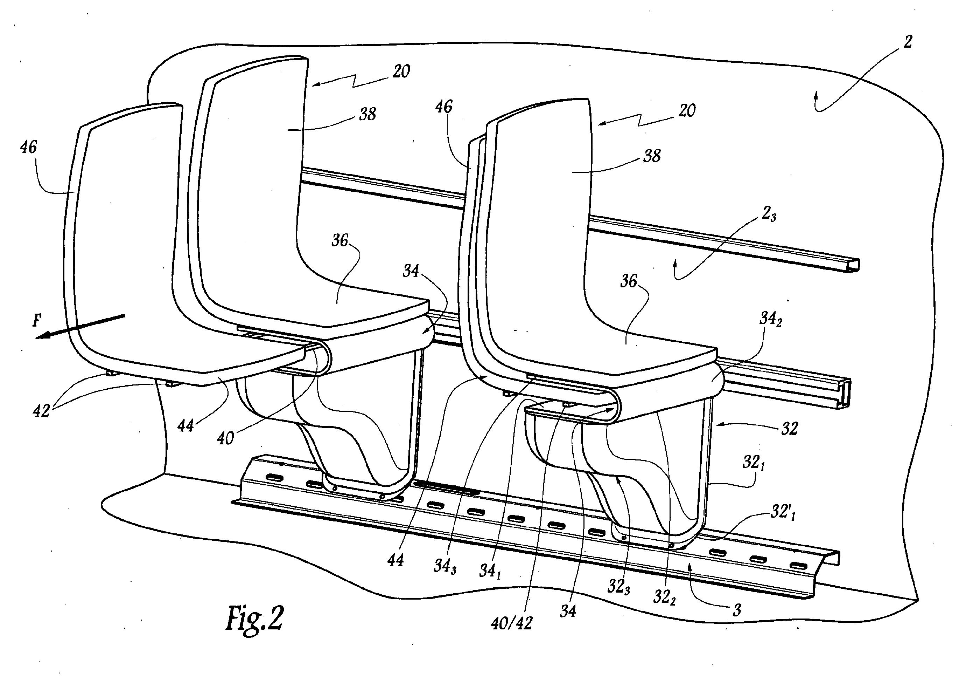

Figure 2 illustrates more precisely two extendable seat units 20, fitted in the middle area 18 of the transport vehicle according to this invention. However, the extendable seat units 14₁ and 14₂ have a structure similar to that of these seat units 20.

Each seat unit 20 has, firstly, a pedestal 32, which consists of a shell made from a composite material, having approximately the shape of a triangle. The vertical side 32₁ of the pedestal 32 is fixed to the side edge 2₃ of the vehicle body 2, using any appropriate means, in particular snap-fit mechanisms which are not shown.

The lower corner 32'₁ of the pedestal 32 is fixed onto the floor 3 of the body 2, in particular by means of screws.

Furthermore, the horizontal side 32₂ of said pedestal supports the lower wing 34₁ of a support element 34, having an U-shape overall. The central part 34₂ of the support element 34 is situated at the front of the seat unit 20, while the upper wing 34₃ of the U supports a main seat bottom 36 of the seat unit 20, which extends into a main seatback 38. Said seat bottom 36 and said seatback 38, which are fixed to each other, are joined to the pedestal 32 of the seat unit 20.

It will be noted that the oblique side 32₃ of the pedestal 32, which joins the lower corner 32'₁ to the horizontal side 32₂, extends upwards from the floor 3. Moreover, the pedestal 32 does not protrude laterally in relation to the main seat bottom 36. In other words, seen from above, said pedestal does not extend beyond said seat bottom 36, in the direction of the side edge 2₄ having doors 4 and 6.

The lower wing 34₁ of the element 34 is equipped, on its upper surface, with a fixed slide guide 40, which cooperates with a mobile slide guide 42, joined onto the lower surface of a secondary seat bottom 44 of the seat unit 32. The latter extends into a secondary seatback 46, fixed to said seat bottom 44. Note that the slide guides 40 and 42 are of a known variety.

In its retracted position, illustrated on the right of figure 2, the secondary seat bottom 44 and the secondary seatback 46 are stored respectively behind the main seat bottom 36 and the main seatback 38. More precisely, the secondary seat bottom 44 is housed in the intermediate space defined by the U-shaped element 34, while the secondary seatback 46 is placed immediately behind the main seatback 38. In this arrangement, a single passenger is able to use this seat unit 20.

By performing an action on the secondary seat bottom 44 or on the secondary seatback 46 in the direction of arrow F, it is possible to move the seat unit 20 into its extended position, illustrated on the left of figure 2. Note that this movement is a lateral one, in relation to the vehicle's main longitudinal axis.

In this extended position, the secondary seat bottom 44 and the secondary seatback 46 are next to the main seat bottom 36 and the main seatback 38, so that two passengers are able to use the seat unit 20. The slide guides 40 and 42 are equipped with locking mechanisms, which are not illustrated. These allow them to be secured when fully extended, in order to avoid any undesirable movement of the secondary seat bottom 44 and the secondary seatback 46 in their extended position.

Figure 1A shows the transport vehicle according to this invention, in an arrangement whereby the various seat units 14₁, 14₂ and 16 are in their retracted position. This makes it possible to create, between the facing seat units 14₁ and 14₂, a wide front corridor C₁ as well as, between the seat units 20 and the side 2₄, a wide back corridor C₂. In this figure 1A, as in figure 1B shown below, the shaded areas show the areas through which passengers can move within the vehicle.

This arrangement is particularly suitable for situations with large numbers of passengers, in which a lot of space is needed in order to hold standing passengers. Moreover, the presence of these wide corridors C₁ and C₂ makes it possible to increase the flow of passengers into the vehicle, resulting in a reduction of waiting time at the stop.

Figure 1B shows the same transport vehicle, in which the various seat units 14₁, 14₂ and 20 are now in their extended position. As a result, these seat units now form corridors C'₁ and C'₂, which are narrower. This arrangement is more specifically suitable for situations with less passengers, in which there is a considerable need for seats.

Note also that, thanks to this invention, maintenance of the transport vehicle according to this invention is made particularly easy. Thus, given that the pedestal of the extendable seat unit does not protrude laterally beyond its main position, it is easier to access to the space beneath the seat unit, making cleaning the vehicle a simpler operation.

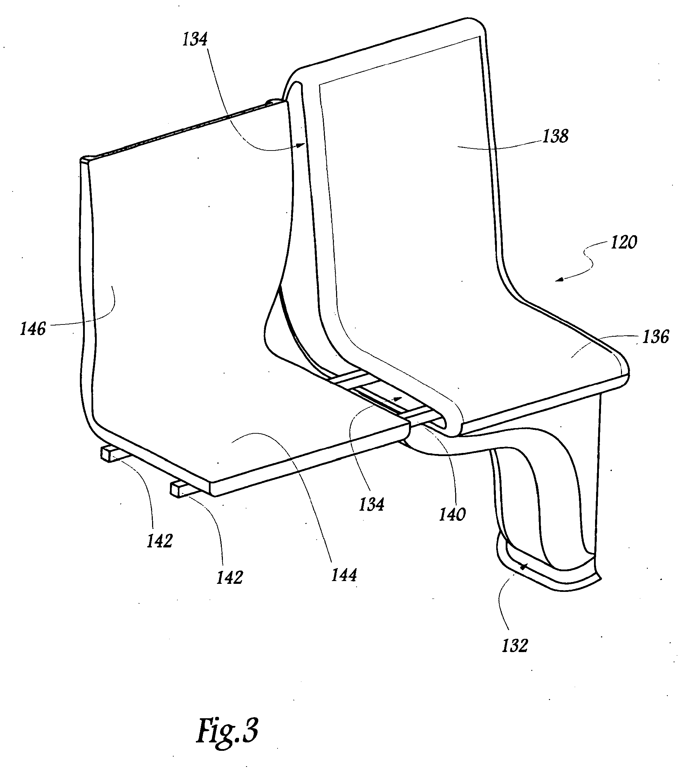

Figure 3 illustrates a further embodiment of the invention. In this drawing, the mechanical elements that are the same as those in figure 2 are given the same reference numbers, increased by 100.

The extendable seat unit 120, shown in this drawing 3, differs to that 20 in figure 2, in that the main seat bottom 136 and the main seatback 138 are much thicker. Furthermore, the side of this seat bottom 136 and this seatback 138 contains a recess 134, extending throughout the width of said elements, forming a housing allowing the secondary seat bottom 144 and the secondary seatback 146 to be stowed away.

Furthermore, there is a fixed slide guide 140, on the lower wall of the aforementioned recess 134, as well as a mobile slide guide 142, on the lower surface of the secondary seat bottom 144. The operations that make it possible, on the one hand, to pull out the secondary seat bottom 144 and the secondary seatback 146 from the main seat bottom 136 and the main seatback 138 and, on the other, to stow them inside the recess 134, are the same as those described in reference to figure 2.

The invention is not limited to the examples described and illustrated.

Therefore, it may be possible to place the respective fixed and mobile slide guides onto the main and secondary seatbacks respectively.

Furthermore, the secondary seatback can be hinged to the secondary seat bottom by means of a transversal hinge. In such conditions, said seatback and said seat bottom form a parallelepiped-shaped whole, which must be opened out laterally. Then, the secondary seatback is pivoted upwards in relation to the secondary seat bottom in order to allow a second passenger to be seated.

It could also be possible for the secondary seat bottom to be hinged onto the secondary seatback. Thus, in its extended position, said secondary seat bottom has to be pivoted downwards in relation to the secondary seatback.

By way of a further embodiment, a line of extendable seat units could be placed along edge 2₄ of the vehicle body, which is equipped with doors 4 and 6. This extra line of seat units is thus placed opposite the line formed by the seat units 20, illustrated in figures 1A and 1B.

Lastly, it could be possible for the row 28 of four fixed seats to be replaced by a row of two extendable seat units, according to the invention, placed side by side. Thus, each main seat bottom and each main seatback is placed against a respective side edge of the vehicle, while the two secondary seat bottoms and the two secondary seatbacks define the middle opening 30, which is narrower when the seat units are in their extended position.

## Claims

1. Extendable seat unit for transport vehicle, comprising a pedestal (32 ; 132) intended to rest on the floor (3) of a body (2) of said vehicle, as well as a main seat bottom (36; 136) and a main seatback (38; 138) which are suitable to hold a first passenger, wherein said seat unit also comprises a secondary seat bottom (44; 144) and a secondary seatback (46 ; 146) which are movable between a retracted position, in which they are stowed in relation to the main seat bottom (36; 136) and the main seatback (38; 138), and an extended position, in which they are arranged alongside the main seat bottom (36; 136) and the main seatback (38; 138) so as to hold a second passenger, said secondary seat bottom (44; 144) and said secondary seatback (46 ; 146) being mobile in relation to said main seat bottom (36; 136) and said main seatback (38; 138) by means of a lateral movement (arrow F), in relation to a main longitudinal axis of the vehicle, while the pedestal (32 ; 132) of the seat unit (20 ; 120) does not protrude laterally beyond the main seat bottom (36 ; 136); and housing means (34; 134) within which at least said secondary seat bottom (44; 144) is stowed in the seat's retracted position; the seat unit being **characterized in that**, in its retracted position, said secondary seat bottom (44; 144) and said secondary seatback (46;146) are stored, respectively, behind said main seat bottom (36; 136) and said main seatback (38; 138),

2. Seat unit according to claim 1, **characterised in that** said housing means (34; 134) comprise a U-shaped support element (34), the lower wing (34₁) of which is mounted on the pedestal (32) and the upper wing of which (34₃) supports the main seat bottom (36), said two wings defining an intermediate space in which said secondary seat bottom (44) is stowed.

3. Seat unit according to claim 1, **characterised in that** the main seat bottom (136) and the main seatback (138) are hollowed out with an opening (134), forming said housing means (134) within which the secondary seat bottom (144) and the secondary seatback (146) are stowed.

4. Seat unit according to any of the previous claims, **characterised in that** the seat unit (20 ; 120) is equipped with means for moving the secondary seat bottom (44 ; 144) and the secondary seatback (46 ; 146) in relation to the main seat bottom (36; 136) and the main seatback (38 ; 138), said means of movement comprising a slide guide (40 ; 140) that is fixed in relation to the seat bottom (32 ; 132), as well as a slide guide (42 ; 142) that is mobile in relation to the fixed slide guide (40 ; 140), said mobile slide guide (42 ; 142) being joined to at least the secondary seat bottom (44 ; 144).

5. Seat unit according to claims 2 and 4, **characterised in that** the fixed slide guide (40) is mounted on the lower wing (34₁) of the support element (34), while the mobile slide guide (42) is mounted beneath the secondary seat bottom (44).

6. Seat unit according to claims 3 and 4, **characterised in that** the fixed slide guide (140) is mounted on the lower wall of the opening (134), while the mobile slide guide is mounted beneath the secondary seat bottom (144).

7. Seat unit according to any of the previous claims, **characterised in that** the pedestal (32 ; 132) is made in the form of a shell, more particularly in a composite material, having the overall form of a triangle, one vertical side(32₁) of this triangle being able to be placed against one lateral edge (2₃) of the vehicle's body (2), one horizontal side (32₂) of the triangle being place alongside the main seat bottom (36 ; 136), and one oblique side (32₃) of this pedestal (32 ; 132) extending above the floor (3) of the vehicle, once the seat unit has been assembled.

8. Transport vehicle, in particular a bus, trolleybus or tram, comprising a body (2), at least one front axle (8₁, 8₂) and at least one back axle (10), as well as at least one line of extendable seat units (14₁, 14₂, 20) according to any one of the previous claims and/or at least one row of extendable seat units according to any one of the previous claims.

9. Vehicle according to claim 8, **characterised in that** it has a line of said extendable seat units (20) along one edge (2₃) of the vehicle's body (2), which is placed opposite the access doors (4, 6) of the vehicle.

10. Vehicle according to claim 8 or 9, **characterised in that** it has a line of said extendable seat units (14₁, 14₂) over at least one of the front wheel arches (12).

## Patentansprüche

1. Ausfahrbare Sitzeinheit für ein Transportfahrzeug, umfassend einen Standfuß (32; 132), der dafür vorgesehen ist, auf dem Boden (3) einer Karosserie (2) des Fahrzeugs zu ruhen, sowie ein Hauptsitzunterteil (36; 136) und eine Hauptrückenlehne (38; 138), die geeignet sind, einen ersten Fahrgast zu halten, wobei die Sitzeinheit auch ein sekundäres Sitzunterteil (44; 144) und eine sekundäre Rückenlehne (46; 146) umfasst, die zwischen einer eingefahrenen Stellung, in der sie in Relation zu dem Hauptsitzunterteil (36; 136) und der Hauptrückenlehne (38; 138) verstaut sind, und einer ausgefahrenen Stellung bewegbar sind, in der sie neben dem Hauptsitzunterteil (36; 136) und der Hauptrückenlehne (38; 138) angeordnet sind, um einen zweiten Fahrgast zu halten, wobei das sekundäre Sitzunterteil (44; 144) und die sekundäre Rückenlehne (46; 146) in Relation zu dem Hauptsitzunterteil (36; 136) und der Hauptrückenlehne (38; 138) mittels einer seitlichen Bewegung (Pfeil F) in Relation zu einer Hauptlängsachse des Fahrzeugs beweglich sind, während der Standfuß (32; 132) der Sitzeinheit (20; 120) nicht seitlich über das Hauptsitzunterteil (36; 136) hinaus vorsteht; und Gehäusemittel (34; 134), in welchen zumindest das sekundäre Sitzunterteil (44; 144) in der eingefahrenen Stellung des Sitzes verstaut ist; wobei die Sitzeinheit **dadurch gekennzeichnet ist, dass** das sekundäre Sitzunterteil (44; 144) und die sekundäre Rückenlehne (46; 146) in ihrer eingefahrenen Stellung jeweils hinter dem Hauptsitzunterteil (36; 136) und der Hauptrückenlehne (38; 138) gelagert sind.

2. Sitzeinheit nach Anspruch 1,
**dadurch gekennzeichnet, dass**
die Gehäusemittel (34; 134) ein U-förmiges Stützelement (34) umfassen, dessen unterer Schenkel (34₁) an dem Standfuß (32) montiert ist, und dessen oberer Schenkel (34₃) das Hauptsitzunterteil (36) abstützt, wobei die zwei Schenkel einen dazwischenliegenden Raum definieren, in welchem das sekundäre Sitzunterteil (44) verstaut ist.

3. Sitzeinheit nach Anspruch 1,
**dadurch gekennzeichnet, dass**
das Hauptsitzunterteil (136) und die Hauptrückenlehne (138) ausgehöhlt sind, mit einer Öffnung (134), die die Gehäusemittel (134) bilden, in welchen das sekundäre Sitzunterteil (144) und die sekundäre Rückenlehne (146) verstaut sind.

4. Sitzeinheit nach einem der vorhergehenden Ansprüche,
**dadurch gekennzeichnet, dass**
die Sitzeinheit (20; 120) mit Mitteln zum Bewegen des sekundären Sitzunterteils (44; 144) und der sekundären Rückenlehne (46; 146) in Relation zu dem Hauptsitzunterteil (36; 136) und der Hauptrückenlehne (38; 138) ausgestattet ist, wobei die Bewegungsmittel eine Gleitführung (40; 140) umfassen, die in Relation zu dem Sitzunterteil (32; 132) fest ist, sowie eine Gleitführung (42; 142), die in Relation zu der festen Gleitführung (40; 140) beweglich ist, wobei die bewegliche Gleitführung (42; 142) mit zumindest dem sekundären Sitzunterteil (44; 144) verbunden ist.

5. Sitzeinheit nach den Ansprüchen 2 und 4,
**dadurch gekennzeichnet, dass**
die feste Gleitführung (40) an dem unteren Schenkel (34₁) des Stützelements (34) montiert ist, während die bewegliche Gleitführung (42) unterhalb des sekundären Sitzunterteils (44) montiert ist.

6. Sitzeinheit nach den Ansprüchen 3 und 4,
**dadurch gekennzeichnet, dass**
die feste Gleitführung (140) an der unteren Wand der Öffnung (134) montiert ist, während die bewegliche Gleitführung unterhalb des sekundären Sitzunterteils (144) montiert ist.

7. Sitzeinheit nach einem der vorhergehenden Ansprüche,
**dadurch gekennzeichnet, dass**
der Standfuß (32; 132) in der Form einer Schale, insbesondere in einem Verbundmaterial, hergestellt ist, die die Gesamtform eines Dreiecks aufweist, wobei eine vertikale Seite (32₁) dieses Dreiecks gegen einen Seitenrand (2₃) der Karosserie (2) des Fahrzeugs platziert sein kann, eine horizontale Seite (32₂) des Dreiecks neben dem Hauptsitzunterteil (36; 136) platziert sein kann, und eine schräge Seite (32₃) dieses Standfußes (32; 132) sich über dem Boden (3) des Fahrzeugs erstreckt, sobald die Sitzeinheit zusammengebaut worden ist.

8. Transportfahrzeug, insbesondere ein Bus, ein Trolleybus oder eine Straßenbahn, umfassend eine Karosserie (2), zumindest eine Vorderachse (8₁, 8₂) und zumindest eine Hinterachse (10) sowie zumindest eine Zeile ausfahrbarer Sitzeinheiten (14₁, 14₂, 20) nach einem der vorhergehenden Ansprüche und/oder zumindest eine Reihe ausfahrbarer Sitzeinheiten nach einem der vorhergehenden Ansprüche.

9. Fahrzeug nach Anspruch 8,
**dadurch gekennzeichnet, dass**
es eine Zeile der ausfahrbaren Sitzeinheiten (20) längs eines Randes (2₃) der Karosserie (2) des Fahrzeugs aufweist, die gegenüber den Zugangstüren (4, 6) des Fahrzeugs platziert ist.

10. Fahrzeug nach Anspruch 8 oder 9,
**dadurch gekennzeichnet, dass**
es eine Zeile der ausfahrbaren Sitzeinheiten (14₁, 14₂) über zumindest einem der Vorderradkästen (12) aufweist.

## Revendications

1. Unité de siège extensible pour véhicule de transport, comprenant un socle (32 ; 132) destiné à reposer sur le plancher (3) d'une carrosserie (2) dudit véhicule, ainsi qu'une base de siège principal (36 ; 136) et un dossier de siège principal (38 ; 138) qui sont appropriés pour soutenir un premier passager, où ladite unité de siège comprend également une base de siège secondaire (44 ; 144) et un dossier de siège secondaire (46 ; 146) qui sont mobiles entre une position rétractée, dans laquelle ils sont ancrés relativement à la base de siège principal (36 ; 136) et au dossier de siège principal (38 ; 138), et une position étendue, dans laquelle ils sont agencés le long de la base de siège principal (36 ; 136) et du dossier de siège principal (38 ; 138) de façon à soutenir un deuxième passager, ladite base de siège secondaire (44 ; 144) et ledit dossier de siège secondaire (46 ; 146) étant mobiles relativement à ladite base de siège principal (36 ; 136) et audit dossier de siège principal (38 ; 138) au moyen d'un mouvement latéral (flèche F), relativement à un axe longitudinal principal du véhicule, tandis que le socle (32 ; 132) de l'unité de siège (20 ; 120) ne fait pas saillie latéralement au-delà de la base de siège principal (36 ; 136) ; et un moyen de logement (34 ; 134) au sein duquel au moins ladite base de siège secondaire (44 ; 144) est ancrée dans la position rétractée du siège ; l'unité de siège étant **caractérisée en ce que**, dans sa position rétractée, ladite base de siège secondaire (44 ; 144) et ledit dossier de siège secondaire (46 ; 146) sont stockés, respectivement, derrière ladite base de siège principal (36 ; 136) et ledit dossier de siège principal (38 ; 138).

2. Unité de siège selon la revendication 1, **caractérisée en ce que** ledit moyen de logement (34 ; 134) comprend un élément de support en forme de U (34), dont l'aile inférieure (34₁) est montée sur le socle (32) et dont l'aile supérieure (34₃) supporte la base de siège principal (36), lesdites deux ailes définissant un espace intermédiaire dans lequel ladite base de siège secondaire (44) est ancrée.

3. Unité de siège selon la revendication 1, **caractérisée en ce que** la base de siège principal (136) et le dossier de siège principal (138) sont creusés avec une ouverture (134), formant ledit moyen de logement (134) au sein duquel la base de siège secondaire (144) et le dossier de siège secondaire (146) sont ancrés.

4. Unité de siège selon l'une quelconque des revendications précédentes, **caractérisée en ce que** l'unité de siège (20 ; 120) est équipée d'un moyen pour déplacer la base de siège secondaire (44 ; 144) et le dossier de siège secondaire (46 ; 146) relativement à la base de siège principal (36 ; 136) et au dossier de siège principal (38 ; 138), ledit moyen de mouvement comprenant un vide de glissement (40 ; 140) qui est fixe relativement à la base de siège (32 ; 132), ainsi qu'un guide de glissement (42 ; 142) qui est mobile relativement au guide de glissement fixe (40 ; 140), ledit guide de glissement mobile (42 ; 142) étant joint au moins à la base de siège secondaire (44 ; 144).

5. Unité de siège selon les revendications 2 et 4, **caractérisée en ce que** le guide de glissement fixe (40) est monté sur l'aile inférieure (34₁) de l'élément de support (34), tandis que le guide de glissement mobile (42) est monté en dessous de la base de siège secondaire (44).

6. Unité de siège selon les revendications 3 et 4, **caractérisée en ce que** le guide de glissement fixe (140) est monté sur la paroi inférieure de l'ouverture (134), tandis que le guide de glissement mobile est monté en dessous de la base de siège secondaire (144).

7. Unité de siège selon l'une quelconque des revendications précédentes, **caractérisée en ce que** le socle (32 ; 132) est constitué sous la forme d'une coque, plus particulièrement en un matériau composite, ayant la forme globale d'un triangle, un côté vertical (32₁) de ce triangle pouvant être placé contre un bord latéral (2₃) de la carrosserie (2) du véhicule, un côté horizontal (32₂) du triangle étant placé le long de la base de siège principal (36 ; 136) et un côté oblique (32₃) de ce socle (32 ; 132) s'étendant au-delà du plancher (3) du véhicule, une fois que l'unité de siège a été assemblée.

8. Véhicule de transport, en particulier bus, trolley ou tramway, comprenant une carrosserie (2), au moins un essieu avant (8₁, 8₂) et au moins un essieu arrière (10), ainsi qu'au moins une ligne d'unités de siège extensibles (14₁, 14₂, 20) selon l'une quelconque des revendications précédentes et/ou au moins une rangée d'unités de siège extensibles selon l'une quelconque des revendications précédentes.

9. Véhicule selon la revendication 8, **caractérisé en ce qu'**il comporte une ligne desdites unités de siège extensibles (20) le long d'un bord (2₃) de la carrosserie (2) du véhicule, qui est placée à l'opposée des portes d'accès (4, 6) du véhicule.

10. Véhicule selon la revendication 8 ou 9, **caractérisé en ce qu'**il comporte une ligne desdites unités de siège extensibles (14₁, 14₂) par-dessus au moins l'un des passages de roue avant (12).
